**Europäisches Patentamt**

**European Patent Office**

**Office européen des brevets**

(19)

(11) Numéro de publication: **0 094 882**
**B1**

# (12) FASCICULE DE BREVET EUROPEEN

(45) Date de publication du fascicule du brevet:
17.09.86

(51) Int. Cl.⁴: **G 21 C 19/36, B 23 D 31/00**

(21) Numéro de dépôt: **83400965.6**

(22) Date de dépôt: **11.05.83**

(54) **Machine pour compacter des assemblages combustibles et pour en retirer les embouts.**

(30) Priorité: **18.05.82 FR 8208700**

(43) Date de publication de la demande:
**23.11.83 Bulletin 83/47**

(45) Mention de la délivrance du brevet:
**17.09.86 Bulletin 86/38**

(84) Etats contractants désignés:
**BE DE GB**

(56) Documents cités:
**DE - A - 2 456 169**
**FR - A - 2 117 928**
**FR - A - 2 271 040**
**US - A - 3 827 579**

(73) Titulaire: **COMMISSARIAT A L'ENERGIE ATOMIQUE**
**Etablissement de Caractère Scientifique Technique et**
**Industriel, 31/33, rue de la Fédération, F-75015 Paris (FR)**

(72) Inventeur: **Auchapt, Pierre, Villa 19, Cité dee Cyprès,**
**30200 Bagnols sur Ceze (FR)**
Inventeur: **Sablier, Robert, 2, Cité du Bosquet Saint**
**Nazaire, F-30200 Bagnols sur Ceze (FR)**
Inventeur: **Symard, José, Orsan, F-30200 Bagnols sur**
**Ceze (FR)**
Inventeur: **Seyfried, Philippe, 2, rue François Mauriac,**
**F-30200 Bagnols sur Ceze (FR)**

(74) Mandataire: **Mongrédien, André et al, c/o**
**BREVATOME 25, rue de Ponthleu, F-75008 Paris (FR)**

# Description

La présente invention se rapporte à une machine pour compacter des assemblages combustibles, constitués par des structures de protection contenant le combustible et portant des embouts à leurs extrémités, et pour séparer les embouts de ces structures.

Lors des opérations de cisaillage d'assemblages combustibles non démantelés, il est souvent nécessaire d'exécuter un travail préalable de mise en forme et de resserrement des structures de protection du combustible. D'autre part, les embouts qui équipent dans la plupart des cas les assemblages combustibles afin d'en permettre la manutention ou la mise en place dans les réacteurs, doivent le plus souvent être séparés des structures de protection avant la dissolution du combustible dans l'acide nitrique.

Dans l'état actuel de la technique, le compactage des assemblages et la séparation des embouts s'effectuent à l'aide de deux machines différentes.

Ainsi, une première technique connue consiste à séparer les embouts dans une première machine mettant en œuvre un procédé mécanique tel que le sciage, à compacter les structures de protection dans une seconde machine, et enfin à cisailler ces structures en tronçons de faible longueur dans une troisième machine, afin de permettre ultérieurement la dissolution du combustible dans l'acide. Cette première technique présente l'inconvénient d'être particulièrement onéreuse puisqu'elle nécessite trois machines distinctes pour réaliser les trois opérations à accomplir sur les assemblages. Cette multiplication des machines conduit à une augmentation du risque de défaillance de l'une d'entre elles, avec les conséquences qui en résultent au niveau de la productivité de la chaîne.

Une seconde technique connue consiste à compacter les assemblages combustibles dans une première machine, puis à cisailler les structures de protection et à les séparer de leurs embouts dans une deuxième machine. Si cette technique ne met en œuvre que deux machines, elle présente toutefois de nombreux inconvénients. Tout d'abord, elle nécessite d'équiper les cisailles de postes complémentaires tels qu'un tiroir à embouts entraînant un accroissement de la complexité de ces machines. De plus, la séparation des embouts à l'intérieur même de la cisaille présente l'inconvénient notoire que les embouts sont mis en contact avec de la matière fissile, de telle sorte qu'ils doivent être considérés comme des déchets α. Cela a pour conséquence d'accroître sensiblement la quantité de déchets de ce type, qui requièrent comme on le sait des précautions de manutention et de conditionnement particulièrement sévères.

Enfin, quelle que soit la technique utilisée, les machines à compacter connues à ce jour utilisent un serre-flanc qui donne aux constituants de l'assemblage une déformation locale. Un des risques résultant de cette déformation est la rupture des structures entourant le combustible, par suite d'un étirement excessif des parties déformées (dépassement de la charge de rupture en traction). Cette observation est illustrée par le document FR-A 2 117 928 qui concerne une cisaille mettant en œuvre la seconde technique citée précédemment et dans laquelle deux serre-flanc sont utilisés lors du cisaillage des embouts et des structures de protection.

La présente invention a précisément pour objet une machine permettant d'assurer simultanément le compactage des assemblages combustibles et la séparation de leurs embouts, tout en ne présentant pas les inconvénients des techniques connues, la machine selon l'invention réalisant notamment un resserrement des structures de protection du combustible et non une déformation de ces structures et assurant l'évacuation des embouts en dehors des cisailles, ce qui permet de ne pas les considérer comme des déchets α.

A cet effet, et conformément à l'invention, il est proposé une machine pour compacter des assemblages combustibles, constitués par des structures de protection contenant le combustible et portant des embouts à leurs extrémités, et pour séparer les embouts desdites structures, cette machine comprenant un bâti formant une surface d'appui latérale, un coulisseau formant une surface d'appui latérale disposée en vis-à-vis de ladite surface d'appui latérale du bâti, un orifice d'introduction formé dans le bâti pour introduire un assemblage entre lesdites surfaces, des moyens pour déplacer le coulisseau selon une direction perpendiculaire à ces surfaces, au moins un organe de coupe et des moyens pour déplacer cet organe de coupe selon ladite direction, caractérisée en ce que le coulisseau est un coulisseau de compactage portant deux organes de coupe, disposés respectivement en vis-à-vis de deux orifices d'évacuation des embouts formés dans le bâti aux extrémités de la surface d'appui formée sur ce dernier, lesdits moyens pour déplacer les organes de coupe permettant de séparer les embouts desdites structures, et des moyens étant prévus pour évacuer la structure compactée vers un orifice d'évacuation de cette structure formé dans le bâti.

De préférence, la machine selon l'invention est prévue pour accepter des assemblages combustibles de longueurs variables. A cet effet, le coulisseau comprend alors une partie mobile sur laquelle est formée une partie de la surface d'appui du coulisseau et des moyens pour déplacer cette partie mobile selon une direction parallèle à cette surface, l'un desdits organes de coupe et le moyen pour déplacer cet organe étant montés dans ladite partie mobile.

Le coulisseau peut alors comprendre une partie interchangeable sur laquelle est formée une autre partie de la surface d'appui du coulisseau, cette partie interchangeable étant choisie selon la position occupée par la partie mobile, de telle sorte que le coulisseau présente une surface d'appui continue.

De façon comparable, le bâti peut aussi comprendre un obturateur interchangeable sur lequel sont formés une partie de la surface d'appui du bâti et l'orifice d'évacuation des embouts disposé en vis-à-vis de l'organe de coupe monté dans la partie mobile du coulisseau.

On décrira maintenant, à titre d'exemple non limitatif, un mode de réalisation préféré de l'invention en se référant aux dessins annexés dans lesquels:

– la fig. 1 est une vue de dessus, en coupe schématique, montrant une machine réalisée conformément aux enseignements de la présente invention; et
– la fig. 2 est une vue à plus grande échelle et en coupe selon la ligne II–II de la fig. 1.

Comme le montrent les figures, la machine selon l'invention comprend un bâti 10 dans lequel est reçu de façon coulissante un coulisseau 12. De façon plus précise, le bâti 10 comprend une surface d'appui 14 plane et verticale servant d'appui latéral pour un assemblage combustible A dont on désire compacter les structures de protection $A_1$ contenant le combustible nucléaire et dont on désire retirer les embouts d'extrémités $A_2$. Le coulisseau 12 comporte également une surface d'appui 16 plane et parallèle à la surface 14, cette surface 16 étant disposée en vis-à-vis de la surface 14 de telle sorte que l'assemblage A puisse être introduit entre ces deux surfaces par des moyens qui seront décrits ultérieurement. Chacune des surfaces 14 et 16 vient alors en appui sur des faces latérales opposées de cet assemblage A.

Le coulisseau 12 est monté de façon mobile dans le bâti 10, selon une direction perpendiculaire aux surfaces 14 et 16, c'est-à-dire selon une direction horizontale. Le déplacement du coulisseau est commandé, dans le mode de réalisation représenté, par deux vérins électriques 18 fixés sur le bâti 10 et reliés au coulisseau 12 par des tiges horizontales 20 perpendiculaires aux surfaces 14 et 16. Bien entendu, les vérins électriques 18 pourraient être remplacés par tout moyen de commande équivalent tel que des vérins hydrauliques ou qu'un système de commande de vis/écrou. De préférence, la synchronisation des vérins 18 est assurée au moyen d'un axe de synchronisation 22. En outre, à l'intérieur du bâti 10, les tiges de commande 20 sont protégées par des soufflets d'étanchéité 24 reliant le bâti au coulisseau.

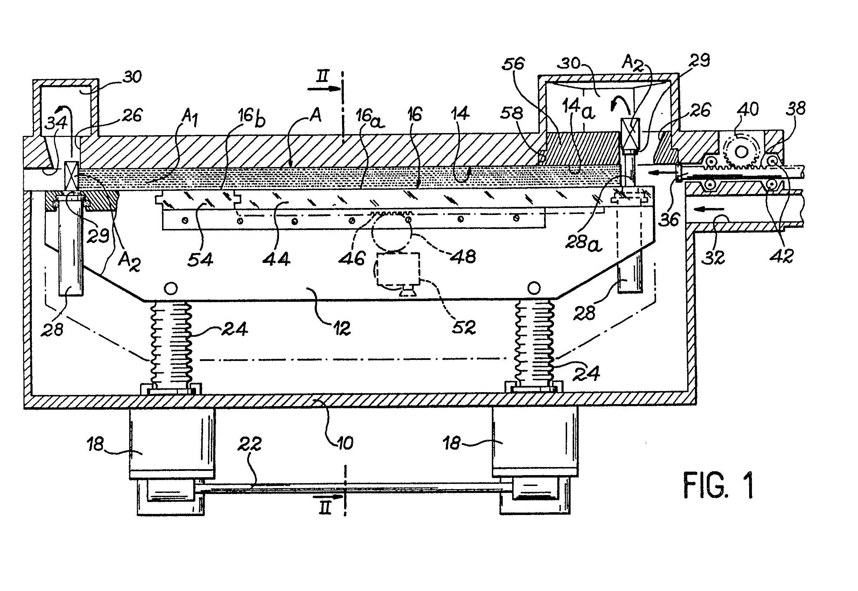

Comme le montre en particulier la fig. 1, la longueur de la surface de butée 14 formée sur le bâti 10 est égale ou légèrement inférieure à la longueur des structures de protection $A_1$ de l'assemblage combustible. Le bâti 10 comporte, au-delà des extrémités de cette surface 14, deux orifices 26 par lesquels sont évacués les embouts $A_2$ après que ceux-ci aient été détachés des structures $A_1$.

A cet effet, on voit sur la fig. 1 que la surface de butée 16 se prolonge jusqu'en vis-à-vis des orifices 26 et porte à ce niveau deux vérins hydrauliques 28 dont les tiges 28a sont disposées perpendiculairement aux surfaces 14 et 16, en vis-à-vis des orifices 26 et de façon à pouvoir faire saillie au-delà de la surface 16 jusqu'à l'intérieur des orifices 26, lorsque les vérins 28 sont actionnés. Les extrémités des tiges 28a des vérins portent des organes de coupe 29 permettant de séparer les embouts $A_2$ de l'assemblage lorsque celui-ci est mis en place comme l'illustre la fig. 1. Bien entendu, les vérins 28 peuvent être remplacés par tout moyen d'actionnement équivalent. De même, les organes de coupe peuvent être constitués par tout organe connu permettant de séparer les embouts $A_2$ des structures $A_1$ de l'assemblage.

De préférence, les orifices 26 formés dans le bâti 10 débouchent dans des systèmes d'évacuation des embouts $A_2$ qui sont constitués par exemple par des trémies 30 dans le mode de réalisation représenté.

Dans la machine représentée sur les figures, l'introduction des assemblages A s'effectue horizontalement, selon une direction parallèle aux surfaces 14 et 16, par un orifice d'introduction 32 décalé vers l'arrière du coulisseau 12 par rapport à la surface de butée 14 du bâti. Afin que l'introduction des assemblages puisse se faire, il est donc nécessaire que le coulisseau 12 puisse reculer suffisamment pour dégager cet orifice 32, comme on l'a représenté en trait mixte sur la fig. 1. A ce moment, la surface de butée 16 du coulisseau est de préférence alignée ou légèrement en retrait par rapport au bord de l'orifice 32 le plus éloigné de la surface 14.

L'introduction de l'assemblage A par l'orifice 32 est réalisée de préférence au moyen d'un dispositif annexe de type connu ne faisant pas partie de la machine. Grâce à ce dispositif, l'assemblage est amené entre les surfaces 14 et 16, de telle sorte que les embouts $A_2$ se trouvent en face des tiges 28a des vérins et des orifices d'évacuation 26. Les vérins 18, synchronisés grâce à l'axe 22, sont alors mis en œuvre simultanément pour déplacer le coulisseau 12 vers la surface de butée 14. Au cours de cette opération, la force appliquée à l'aide des vérins 18 est telle qu'elle assure le compactage des structures de protection $A_1$ de l'assemblage, sans déformer ces structures. Il est à noter que les organes de coupe 29 occupent alors leur position de recul représentée sur la partie gauche de la fig. 1, dans laquelle ils affleurent la surface 16 et assurent la continuité de celle-ci. Compte tenu de la présence des orifices 26 au niveau des embouts $A_2$, cette opération de compactage a pour effet de faire avancer les embouts $A_2$ dans les orifices 26, comme on le voit sur la partie gauche de la fig. 1.

Au cours d'une seconde étape de mise en œuvre de la machine selon l'invention, les vérins 28 sont actionnés, ce qui a pour effet de faire avancer les embouts $A_2$ dans les orifices 26 et de les séparer des structures $A_1$ qui sont toujours en appui sur la surface 14. Les embouts $A_2$ sont alors

évacués dans chacune des trémies 30 comme l'illustrent les flèches sur les figures.

On commande ensuite le recul des tiges 28a des vérins, afin de dégager les extrémités des structures de protection $A_1$ de l'assemblage. Après avoir fait reculer de quelques dizièmes de mm le coulisseau 12 afin de libérer les structures $A_1$, il est alors possible d'évacuer celles-ci horizontalement par un orifice 34 ménagé dans le bâti 10, du côté opposé à l'orifice d'introduction 32. Le bord de l'orifice 34 opposé à la surface de butée 16 est sensiblement aligné avec la surface de butée 14 du bâti.

Afin d'évacuer les structures $A_1$ par l'orifice 34, on prévoit en outre, à côté de l'orifice 32 et en alignement avec l'orifice 34, un poussoir 36 apte à venir s'appliquer sur l'extrémité des structures $A_1$ opposée à l'orifice d'évacuation 34. Dans le mode de réalisation représenté, le poussoir 36 est muni d'une crémaillère 38 sur laquelle s'engrène un pignon 40 dont la rotation peut être commandée par un moteur électrique (non représenté) ou par tout moyen équivalent. Des galets 42 sont montés dans le bâti 10 pour assurer le guidage du poussoir 36.

Conformément à un perfectionnement de la machine qui vient d'être décrite, on prévoit des moyens pour adapter cette machine au traitement d'assemblages A de différentes longueurs.

Ainsi, on voit notamment sur la fig. 1 qu'une partie 16a de la surface de butée 16 du coulisseau est formée sur une partie mobile 44 de celui-ci et que cette partie mobile 44 porte le vérin 28 qui se trouve sur la partie droite de cette figure. De façon plus précise, cette partie 44 du coulisseau est apte à se déplacer horizontalement par rapport au reste du coulisseau dans la direction définie par la surface de butée 16.

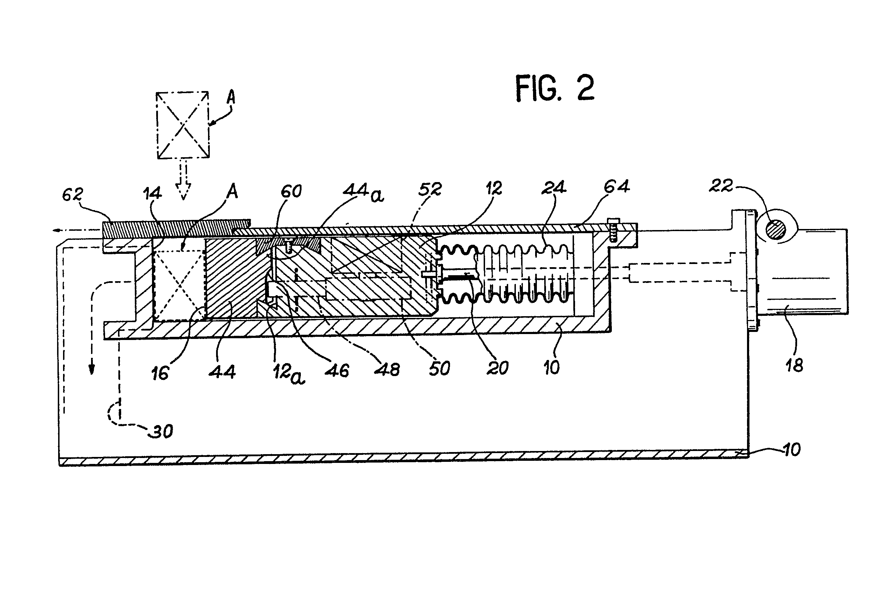

A cet effet et comme l'illustre plus précisément la fig. 2, la pièce 44 comporte une queue d'aronde 44a reçue dans une rainure en queue d'aronde 12a formée dans le coulisseau 12. Le déplacement de la partie 44 est assuré par une crémaillère 46 formée sur la queue d'aronde 44a et dans laquelle vient s'engrener un pignon 48 dont l'axe vertical est porté par le coulisseau 12. Ce pignon 48 est lui-même entraîné par un second pignon à axe vertical 50 dont la rotation est commandée par un dispositif d'entraînement 52, tel qu'un groupe motoréducteur électrique ou que tout dispositif équivalent. Grâce à cette structure, on conçoit qu'il est possible de faire varier à volonté entre deux valeurs données la distance séparant les vérins 28 et, par conséquent, la longueur des assemblages A à traiter.

Bien entendu, on conçoit que les moyens qui viennent d'être décrits pour faire varier la distance séparant les vérins 28 ne sont pas suffisants lorsque leur mise en œuvre éloigne la partie 16a du reste de la surface de butée du coulisseau, ce qui a pour conséquence d'entraîner une discontinuité dans cette surface de butée. A cet effet, il est prévu d'assurer la continuité de la surface de butée 16 en insérant entre la partie mobile 44 et le reste du coulisseau 12 une partie interchangeable 54, sur laquelle est formée une autre partie 16b de la surface d'appui 16. On voit sur la fig. 1 que cette partie 54 est étroitement liée, d'une part, au coulisseau 12 et, d'autre part, à la partie mobile 44, par exemple par des liaisons à tenon et mortaise et par l'action de cette partie 44 qui l'applique contre le coulisseau 12.

De façon comparable, on comprend que l'allongement de l'assemblage A a pour effet, du côté du vérin 28 porté par la pièce mobile 44, de créer une discontinuité dans la surface de butée 14 du bâti si la longueur de cette surface correspond à celle des assemblages de plus petite longueur. A cet effet, on voit sur la fig. 1 que l'orifice 26 placé en vis-à-vis de ce vérin mobile 28, c'est-à-dire sur la partie droite de la fig. 1, est formé dans un obturateur interchangeable 56 dont les dimensions sont choisies en fonction de la position de la partie mobile 44. Cet obturateur 56 est monté dans une ouverture 58 formée dans le bâti et il comprend une partie 14a de la surface de butée 14. La longueur de l'ouverture 58 est choisie de façon à permettre l'adaptation de la machine aux assemblages de plus petite et plus grande longueurs qu'elle est destinée à traiter.

Afin de permettre un remplacement de la partie 44 du coulisseau, on voit sur les figures qu'une partie de la rainure en queue d'aronde 12a formée dans le coulisseau 12 est réalisée dans une pièce amovible 60.

Enfin, on voit sur la fig. 2 que le bâti 10 est obturé à sa partie supérieure, au-dessus de l'espace défini entre les surfaces 14 et 16 et dans lequel est reçu l'assemblage A, par un couvercle 62 solidement fixé au bâti afin d'assurer le bouclage des efforts. Pour permettre une intervention éventuelle entre le bâti 10 et le coulisseau 12, ce couvercle 62 est de préférence amovible. Ce couvercle amovible 62 est prolongé au-dessus du coulisseau par un obturateur 64 qui complète le confinement de la machine.

Selon une variante de réalisation de l'invention représentée schématiquement sur la fig. 2, l'orifice d'introduction 32 des assemblages peut être supprimé. L'introduction de chaque assemblage A s'effectue alors verticalement, le couvercle 62 étant supprimé.

De préférence, la machine selon l'invention est jumelée à une cisaille qui se raccorde directement sur l'orifice de sortie 34 des structures $A_1$. Le poussoir 36 peut alors être utilisé pour faire avancer pas-à-pas les structures $A_1$ dans la cisaille, le poussoir étant rétracté et les structures étant maintenues par le coulisseau 12 au moment de la coupe.

Bien entendu, l'invention n'est pas limitée au mode de réalisation qui vient d'être décrit à titre d'exemple, mais en couvre les variantes. Ainsi, on a vu que l'introduction des assemblages dans la machine peut être effectuée de différentes manières. De façon comparable, on a vu que les différents moyens d'actionnement décrits peuvent être remplacés par tout moyen d'actionnement connu.

**Revendications**

1. Machine pour compacter des assemblages combustibles (A), constitués par des structures de protection (A₁) contenant le combustible et portant des embouts (A₂) à leurs extrémités, et pour séparer les embouts desdites structures, cette machine comprenant un bâti (10) formant une surface d'appui latérale (14), un coulisseau (12) formant une surface d'appui latérale (16) disposée en vis-à-vis de ladite surface d'appui latérale (14) du bâti, un orifice d'introduction (32) formé dans le bâti pour introduire un assemblage (A) entre lesdites surfaces (14, 16), des moyens (18) pour déplacer le coulisseau selon une direction perpendiculaire à ces surfaces, au moins un organe de coupe (29) et des moyens (28) pour déplacer cet organe de coupe selon ladite direction, caractérisée en ce que le coulisseau (12) est un coulisseau de compactage portant deux organes de coupe (29), disposés respectivement en vis-à-vis de deux orifices d'évacuation (26) des embouts formés dans le bâti aux extrémités de la surface d'appui (14) formée sur ce dernier, lesdits moyens (28) pour déplacer les organes de coupe permettant de séparer les embouts desdites structures, et des moyens (36) étant prévus pour évacuer la structure compactée vers un orifice d'évacuation (34) de cette structure formée dans le bâti.

2. Machine selon la revendication 1, caractérisée en ce que le coulisseau (12) comprend une partie mobile (44) sur laquelle est formée une partie (16a) de la surface d'appui du coulisseau et des moyens (46 à 52) pour déplacer cette partie mobile selon une direction parallèle à cette surface, l'un desdits organes de coupe (29) et le moyen (28) pour déplacer cet organe étant montés dans ladite partie mobile.

3. Machine selon la revendication 2, caractérisée en ce que le coulisseau (12) comprend de plus une partie interchangeable (54) sur laquelle est formée une autre partie (16b) de la surface d'appui du coulisseau, cette partie interchangeable étant choisie selon la position occupée par la partie mobile (44), de telle sorte que le coulisseau présente une surface d'appui (16) continue.

4. Machine selon la revendication 2, caractérisée en ce que le bâti comprend un obturateur interchangeable (56) sur lequel sont formés une partie (14a) de la surface d'appui du bâti et l'orifice d'évacuation (26) des embouts disposé en vis-à-vis de l'organe de coupe (29) monté dans la partie mobile (44) du coulisseau.

**Patentansprüche**

1. Maschine zum Zusammendrücken von Brennstoffbündeln (A), die von Schutzstrukturen (A₁) gebildet sind, welche den Brennstoff enthalten und an ihren Enden Endstücke (A₂) tragen, und zum Trennen der Endstücke von diesen Strukturen, wobei diese Maschine umfasst einen eine seitliche Stützfläche (14) bildenden Maschinenrahmen (10), einen Pressenstempel (12), der eine seitliche Stützfläche (16) bildet, die der seitlichen Stützfläche (14) des Maschinenrahmens gegenüberliegend angeordnet ist, eine Einführöffnung (32), die in dem Maschinenrahmen ausgebildet ist, um ein Bündel (A) zwischen die Flächen (14, 16) einzubringen, Mittel (18), um den Pressenstempel (12) in einer zu diesen Oberflächen senkrechten Richtung zu bewegen, wenigstens ein Schneideorgan (29) und Mittel (28), um dieses Schneideorgan in dieser Richtung zu bewegen, dadurch gekennzeichnet, dass der Pressenstempel (12) ein Pressenstempel zum Zusammendrücken ist, der zwei Schneideorgane (29) trägt, die in Gegenüberlage von zwei entsprechenden Austragsöffnungen (26) für die Endstücke angeordnet sind, die in dem Maschinenrahmen an den Enden der Stützfläche (14) angeordnet sind, die an jenem ausgebildet ist, dass die Mittel (28) zum Bewegen der Schneideorgane ermöglichen, die Endstücke von den Strukturen abzutrennen, und dass Mittel (36) vorgesehen sind, um die zusammengedrückte Struktur zu einer in dem Maschinenrahmen ausgebildeten Austragsöffnung (34) auszubringen.

2. Maschine nach Anspruch 1, dadurch gekennzeichnet, dass der Pressenstempel (12) einen bewegbaren Teil (44), auf dem ein Bereich (16a) der Stützfläche des Pressenstempels gebildet ist, und Mittel (46 bis 52) umfasst, um dieses bewegbare Teil in einer zu dieser Oberfläche parallelen Richtung zu bewegen, wobei eines der Schneideorgane (29) und das Mittel (28) zum Bewegen dieses Organes auf dem bewegbaren Teil angebracht sind.

3. Maschine nach Anspruch 2, dadurch gekennzeichnet, dass der Pressenstempel (12) ferner einen austauschbaren Teil (54) aufweist, auf dem ein anderer Bereich (16b) der Stützfläche des Pressenstempels gebildet ist, und dass dieser austauschbare Teil gemäss der von dem bewegbaren Teil (44) eingenommenen Stellung ausgewählt ist, derart, dass der Pressenstempel eine durchgehende Stützfläche (16) aufweist.

4. Maschine nach Anspruch 2, dadurch gekennzeichnet, dass der Maschinenrahmen ein austauschbares Verschlussteil (56) aufweist, welches mit einem Bereich (14a) der Stützfläche des Maschinenrahmens und mit der Austragsöffnung (26) für die Endstücke ausgebildet ist, die dem Schneideorgan (29) gegenüberliegend angeordnet ist, welches an dem bewegbaren Teil (44) des Pressenstempels angebracht ist.

**Claims**

1. Apparatus for compacting fuel assemblies (A) constituted by protection structures (A₁) containing the fuel and having terminal members (A₂) at their ends, and for separating the terminal members from said apparatus comprising a frame (10) forming a lateral bearing surface (14), a slide member (12) forming a lateral bearing surface (16) located facing said lateral bearing surface (14) of the frame, an entry port (32) formed in the frame to introduce an assembly (A) between said surfaces (14, 16) means (18) for displacing the slide member in a direction perpendicular to said surfaces, at least one cutting member (29) and means (28) for displacing said cutting member in said direction, characterized in that the slide member (12) is a compacting slider having two cutting members (29), respectively located opposite two ports (26) formed in the frame at the ends of the bearing surface (14) of the frame, for removal of the terminal members, said means (28) for displacing the cutting members enabling separation of the terminal members from said structures, and means (36) being provided to remove the compacted structure through a structure-removal port (34) formed in the frame.

2. Apparatus according to claim 1, characterized in that the slide member comprises a movable part (44) on which is formed a part (16a) of the bearing surface of the slide member, and means (46 to 52) for displacing said movable part in a direction parallel to said surface, one of the cutting members (29) and the means (28) for displacing said member being mounted on said movable part.

3. Apparatus according to claim 2, characterized in that the slide member (12) additionally comprises an interchangeable part (54), on which is formed a further part (16b) of the bearing surface of the slide member, said interchangeable part being selected according to the position occupied by the movable part (44), whereby the slide member has a continuous bearing surface (16).

4. Apparatus according to claim 2, characterized in that the frame comprises an interchangeable closure member (56), on which is formed a part (14a) of the bearing surface of the frame and the removal port (26) for the terminal members, located opposite the cutting member (29) mounted on the movable part (44) of the slide member.

FIG. 1

FIG. 2